# EUROPEAN PATENT APPLICATION

(11) **EP 4 738 093 A1**
(43) Date of publication of application: **06.05.2026**
(21) Application number: 23943217.2
(22) Date of filing: 08.10.2023
(51) Int. Cl.: G06F 3/14, B60K 35/21, B60K 35/22, B60K 35/29, G09G 5/14, G09G 5/36, G06F 9/455

(54) **CROSS-DOMAIN DISPLAY METHOD AND APPARATUS UNDER VIRTUAL MANAGEMENT, AND DEVICE AND MEDIUM**

(30) Priority: 29.06.2023 CN 202310784011
(71) Applicant: Ecarx (Hubei) Tech Co., Ltd., Wuhan, Hubei 430056 (CN)
(72) Inventor: LIU, Liang, Wuhan, Hubei 430056 (CN); DONG, Xiaoping, Wuhan, Hubei 430056 (CN); YU, Benqiang, Wuhan, Hubei 430056 (CN)
(74) Representative: Bandpay & Greuter
(86) International application number: PCT/CN2023/123293
(87) International publication number: WO 2025/000738

(57) **Abstract**

A method and an apparatus for cross-domain display based on virtualization management, a device, and a medium are provided, the method includes: in response to a triggered picture displaying operation, storing (S110), by a first display driver, a to-be-displayed picture in a first buffer queue, concurrently, storing, by a first virtual front-end driver, the to-be-displayed picture in a second buffer queue; and pulling (S120), by the first display driver, the to-be-displayed picture from the first buffer queue and driving a first display device to perform picture playing, concurrently, pulling, by a first virtual back-end driver, the to-be-displayed picture from the second buffer queue and driving, by a second display driver, a second display device to perform picture playing.

## Description

The present application claims priority to Chinese Patent Application No. 202310784011.2 and filed with the China National Intellectual Property Administration on June 29, 2023, which is hereby incorporated by reference in its entirety.

### TECHNICAL FIELD

The present application relates to the field of display screen technologies and, in particular, to a method and an apparatus for cross-domain display based on virtualization management, a device, and a medium.

### BACKGROUND

Nowadays, in intelligent cabin solutions, more and more operating systems run in a cabin to satisfy the experiences of users in different areas. To achieve this goal, if the number of system-on-chip (System on Chip, SOC) in the cabin is increased, the hardware cost of the automobile may be increased. Also, with the development of nano-refinements, the capacity of nano-SOC chips is getting higher and higher, and a single SOC running a single operating system often leads to hardware overcapacity.

### SUMMARY

Embodiments of the present application provide a method and an apparatus for cross-domain display based on virtualization management, a device, and a medium.

In a first aspect, this embodiment provides a method for cross-domain display based on virtualization management, applied to one system-on-chip (SOC) including thereon at least a first operating system domain and a second operating system domain, where the first operating system domain integrates therein a first virtual front-end driver and a first display driver, and the first operating system domain is connected to a first display device; the second operating system domain integrates therein a first virtual back-end driver and a second display driver, and the second operating system domain is connected to a second display device; and the method includes:
in response to a triggered picture displaying operation, storing, by the first display driver, a to-be-displayed picture in a first buffer queue, concurrently, storing, by the first virtual front-end driver, the to-be-displayed picture in a second buffer queue, where the picture displaying operation is a play-triggering operation performed for a playback plug-in in the first operating system domain; and
pulling, by the first display driver, the to-be-displayed picture from the first buffer queue and driving the first display device to perform picture playing, concurrently, pulling, by the first virtual back-end driver, the to-be-displayed picture from the second buffer queue and driving, by the second display driver, the second display device to perform picture playing.

In a second aspect, this embodiment provides an apparatus for cross-domain display based on virtualization management, integrated in one system-on-chip (SOC) including thereon at least a first operating system domain and a second operating system domain, where the first operating system domain integrates therein a first virtual front-end driver and a first display driver, and the first operating system domain is connected to a first display device; the second operating system domain integrates therein a first virtual back-end driver and a second display driver, and the second operating system domain is connected to a second display device; and the apparatus includes:
a first responding module, configured to: in response to a triggered picture displaying operation, store, by the first display driver, a to-be-displayed picture in a first buffer queue, concurrently, store, by the first virtual front-end driver, the to-be-displayed picture in a second buffer queue, where the picture displaying operation is a play-triggering operation performed for a playback plug-in in the first operating system domain; and
a picture playing module, configured to: pull, by the first display driver, the to-be-displayed picture from the first buffer queue and drive the first display device to perform picture playing, concurrently, pull, by the first virtual back-end driver, the to-be-displayed picture from the second buffer queue and drive, by the second display driver, the second display device to perform picture playing.

In a third aspect, this embodiment provides an electronic device, including:
at least one system-on-chip (SOC), where an SOC of the at least one SOC includes a first operating system domain and a second operating system domain; the first operating system domain integrates therein a first virtual front-end driver and a first display driver, and the first operating system domain is connected to a first display device; the second operating system domain integrates therein a first virtual back-end driver and a second display driver, and the second operating system domain is connected to a second display device; and
a memory in communication with the at least one SOC;
where the memory stores a computer program executable by the at least one SOC, and the computer program is executed by the at least one SOC to enable the at least one SOC to execute the method for cross-domain display based on virtualization management according to any one of the embodiments of the present application.

In a fourth aspect, the present embodiment provides a computer-readable storage medium storing computer instructions, where the computer instructions are used to enable an SOC to implement the method for cross-domain display based on virtualization management according to any embodiment of the present application when executed.

It should be understood that what is described in this section above is not intended to identify key or important features of embodiments of the present application, nor is it intended to limit the scope of the present application. Other features of the present application will be easily understood through the following description.

### BRIEF DESCRIPTION OF DRAWINGS

In order to describe the technical solutions in embodiments of the present application more clearly, drawings that need to be used in the description of the embodiments will be introduced briefly in the following. Obviously, the drawings described below are merely some embodiments of the present application, and for those of ordinary skill in the art, other drawings can be obtained based on these drawings without paying creative efforts.
FIG. 1 is an illustrative structural diagram of a display system based on virtualization management in a related art.
FIG. 2 is an illustrative structural diagram of another display system based on virtualization management in a related art.
FIG. 3 is an illustrative structural diagram of yet another display system based on virtualization management in a related art.
FIG. 4 is an illustrative diagram of an effect achieved by a display system based on virtualization management when playing a picture in a related art.
FIG. 5 is a schematic flowchart of a method for cross-domain display based on virtualization management provided by Embodiment 1 of the present application.
FIG. 6 is an illustrative structural diagram of a SOC in a method for cross-domain display based on virtualization management provided by Embodiment 1 of the present application.
FIG. 7 is an illustrative diagram of a display setting interface in a method for cross-domain display based on virtualization management provided by Embodiment 1 of the present application.
FIG. 8 is an illustrative diagram of an effect of cross-domain and cross-screen playing in an execution of a method for cross-domain display based on virtualization management provided by Embodiment 1 of the present application.
FIG. 9 is a schematic flowchart of a method for cross-domain display based on virtualization management provided by Embodiment 2 of the present application.
FIG. 10 is another illustrative structural diagram of a SOC in an execution of a method for cross-domain display based on virtualization management provided by Embodiment 2 of the present application.
FIG. 11 is an illustrative flowchart of a method for cross-domain display based on virtualization management in a certain application scenario provided by Embodiment 2 of the present application.
FIG. 12 is a schematic structural diagram of an apparatus for cross-domain display based on virtualization management provided by Embodiment 3 of the present application.
FIG. 13 is a schematic structural diagram of an electronic device provided in Embodiment 4 of the present application.

### DESCRIPTION OF EMBODIMENTS

In order to facilitate a better understanding of the present application for those skilled in the art, the technical solutions in the embodiments of the present application will be described below clearly and completely in conjunction with the drawings in the embodiments of the present application. Obviously, the described embodiments are merely part of the embodiments of the present application, rather than all of the embodiments. Based on the embodiments in the present application, all other embodiments obtained by those of ordinary skill in the art without creative work shall belong to the protection scope of the present application.

It should be noted that the terms "original", "target", etc. in the specification, claims, and drawings of the present application are used to distinguish similar objects and are not necessarily used to describe a specific order or sequence. It should be understood that data used in this way are interchangeable under appropriate circumstances such that the embodiments of the present application described herein are capable of being practiced in sequences other than those illustrated or described herein. In addition, the terms "including", "having", and any variations thereof, are intended to cover non-exclusive inclusions. For example, a process, method, system, product, or device that includes a series of steps or units is not necessarily limited to those steps or units explicitly listed, but may include other steps or units not explicitly listed or inherent to such process, method, product, or device.

Nowadays, in intelligent cabin solutions, more and more operating systems run in a cabin to satisfy the experiences of users in different areas. To achieve this goal, if the number of SOCs in the cabin is increased, the hardware cost of the automobile may be increased. Also, with the development of nano-refinements, the capacity of nano-SOC chips is getting higher and higher, and a single SOC running a single operating system often leads to hardware overcapacity.

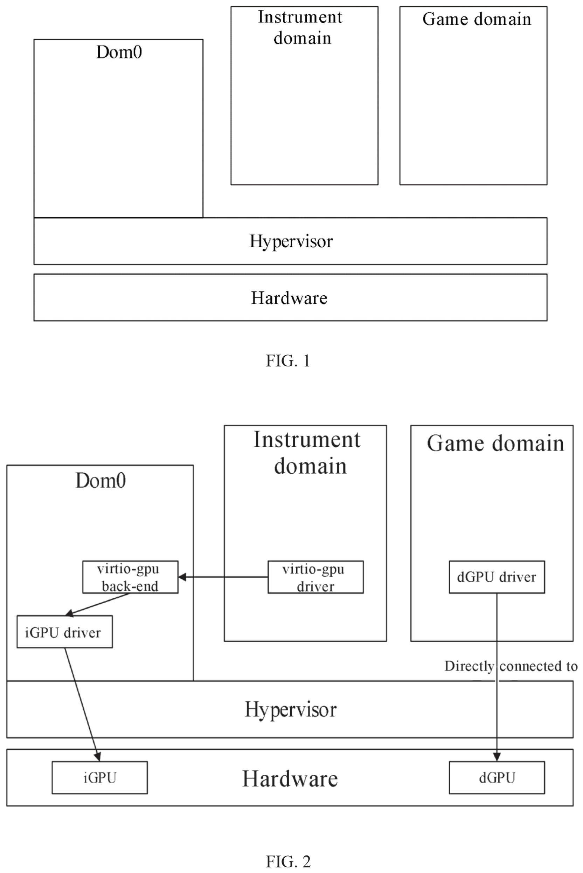

Therefore, technical solutions for running multiple systems on a single SOC are proliferating. Multi-system solutions implemented based on a kernel virtualization technology (Linux Container, LXC), multi-system solutions implemented based on Hypervisor, and multi-system solutions implemented based on hardware isolation all came into being in this context. The multi-system solution implemented based on hardware isolation has an obvious defect, that is, how multiple systems access the same external device. If multiple systems are deployed with multiple external devices, the cost of the multi-system solution will increase significantly, and therefore at present, vehicular systems mostly use Type-1 Hypervisor to support multiple systems. Hypervisor is an intermediate software layer that runs between an underlying physical server and operating systems, allowing multiple operating systems and applications to share hardware. Illustratively, FIG. 1 is an illustrative structural diagram of a display system based on virtualization management in a related art. As shown in FIG. 1, the display system includes hardware, and three operating system domains are virtualized by the implementation of Hypervisor virtualization technology, which are a Dom0 domain, an instrument domain, and a game domain (which is Android system in the game domain) respectively, where the Dom0 domain is a privileged domain, which has the privilege of accessing hardware devices and can manage and control other domains.

Under this scheme, since a graphics processing unit (Graphics Processing Unit, GPU, generally called iGPU) built in an SOC has a performance that may not be very strong, and it has to support multiple systems running simultaneously, its capacity has no surplus; in order to better support large-scale games, a GPU (generally called dGPU) may be added. Illustratively, FIG. 2 is an illustrative structural diagram of another display system based on virtualization management in a related art. As shown in FIG. 2, the iGPU is left in the Dom0 domain, and the instrument domain uses the iGPU through a virtio-gpu, and the dGPU is directly connected to the game domain to support large-scale games.

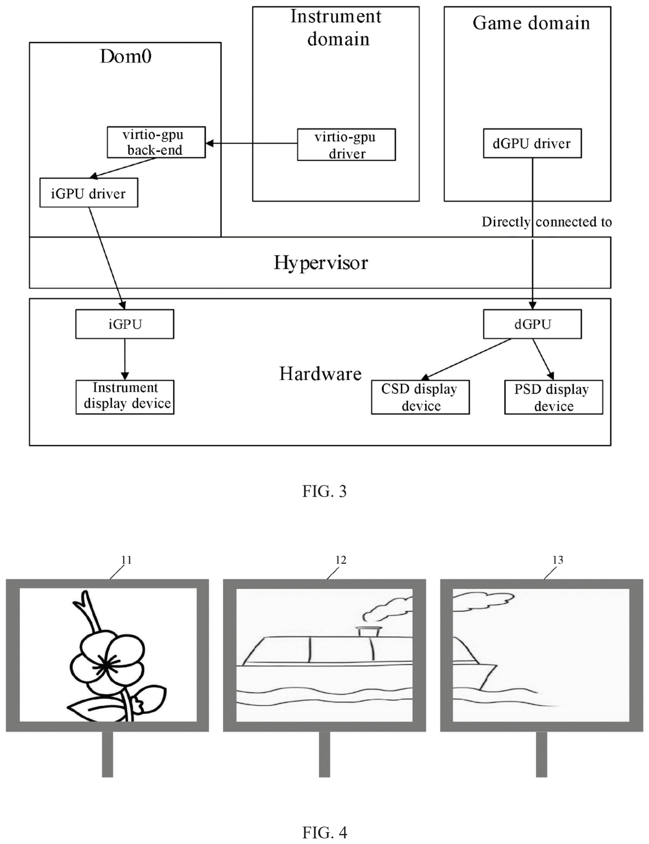

At that point, there may be a plurality of display devices. It is assumed that the instrument domain is displayed on an instrument display device, and the instrument display device is connected onto the iGPU; the game domain is displayed on a main display device CSD and an auxiliary display device PSD, and the main display device CSD and the auxiliary display device PSD are connected onto the dGPU, that is, the game domain has two display devices. Illustratively, FIG. 3 is an illustrative structural diagram of yet another display system based on virtualization management in a related art. As shown in FIG. 3, there are three display devices in total, and they are placed in order. It is assumed that the instrument display device, the CSD display device and the PSD display device are placed in order from left to right, the display thereof is as shown in FIG. 3. The rest of the parts have been described above and will not be repeated here.

In this case, there is a demand for this system to play a complete video across three screens. Illustratively, when there is a need to play a cross-domain and cross-multi-screen video, the presenting of the video on the three screens is required to be seamlessly spliced, for which assuming that a current picture of the played video is a ship, the complete current picture should be displayed on these three screens.

For the demand mentioned above, a general scheme is to cut the complete video into small pieces of video on the three screens, and then play them on the three display devices respectively, and perform video synchronization among the three display devices through a certain communication manner. This scheme will encounter complex synchronization issues between the three pieces of the video, including coarse-grained synchronization of starting, stopping, pausing, and resuming, and also involving fine-grained synchronization of video playback time. These synchronizations are very complex and difficult, and it is difficult to achieve good synchronization effects. If it is not handled properly, it is prone to a situation of un-synchronization or unsatisfactory synchronization between the three pieces of video, which may result in a very poor visual effect and can be easily seen. The pieces of the video on the two screens may be obviously out of synchronization, leading to inconsistent displayed scenarios and resulting in the effect of video fragmentation. Furthermore, there are various other anomalies, for example, some of the three pieces of the video may have been stopped while others have not been stopped, resulting in abnormal interface display. Illustratively, FIG. 4 is an illustrative diagram of an effect achieved by a display system based on virtualization management when playing a picture in a related art. As shown in FIG. 4, the description is made continuing with the illustration mentioned above. With a method where the complete video is cut into three small pieces of video to be played on the three display devices respectively, there is a situation where a picture played by a display device 11 is inconsistent with a picture played by a display device 12 and a picture played by a display device 13, that is, the display device 11 should also display a part of the content of the current picture with a ship, but the picture with a flower displayed by the display device 11 is obviously not synchronized with the picture with the ship. Therefore, a display method is needed to cope with the situation.

### Embodiment 1

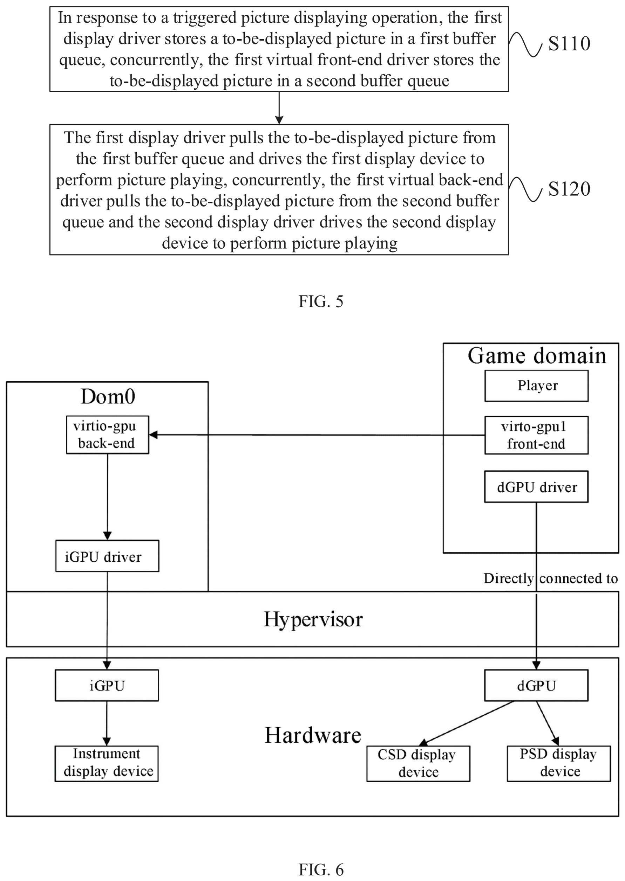

FIG. 5 is a schematic flowchart of a method for cross-domain display based on virtualization management provided by Embodiment 1 of the present application. The method can perform picture displaying in a cross-domain and cross-multi-screen manner and can be executed by an apparatus for cross-domain display based on virtualization management. The apparatus can be realized in the form of hardware and/or software and can be configured in an electronic device.

The method is applied to one system-on-chip (SOC) including thereon at least a first operating system domain and a second operating system domain, where the first operating system domain integrates therein a first virtual front-end driver and a first display driver, and the first operating system domain is connected to a first display device; the second operating system domain integrates therein a first virtual back-end driver and a second display driver, and the second operating system domain is connected to a second display device.

In this embodiment, at least two operating system domains are virtualized based on the same SOC by using virtualization technology. Different operating system domains correspond to their operating systems, and they are respectively noted as the first operating system domain and the second operating system domain to distinguish different operating system domains. The first operating system domain and the second operating system domain are respectively connected with display devices. In this embodiment, a display device connected with the first operating system domain is noted as a first display device, and a display device connected with the second operating system domain is noted as a second display device. There is no specific limitation on the number of the first display devices and the number of the second display devices, for example, there may be one or more first display devices and there may also be one or more second display devices.

It should be noted that the first operating system domain is integrated a display driver, which is noted as a first display driver, and the second operating system domain is also integrated a display driver, which is noted as a second display driver. The first display driver and the second display driver can be understood as programs for driving corresponding graphics cards, and they are native drivers. In this embodiment, in order to realize that a picture played in the first operating system domain is simultaneously displayed on the first display device and the second display device, the virtualization technology virtio is adopted to virtualize a virtual front-end driver and a virtual back-end driver, which are noted as a first virtual front-end driver and a first virtual back-end driver respectively, and the first virtual front-end driver is integrated into the first operating system domain, and the first virtual back-end driver is integrated into the second operating system domain.

As shown in FIG. 5, a method for cross-domain display based on virtualization management provided by Embodiment 1 may include steps as follows.

S110, in response to a triggered picture displaying operation, the first display driver stores a to-be-displayed picture in a first buffer queue, concurrently, the first virtual front-end driver stores the to-be-displayed picture in a second buffer queue.

The first operating system domain may be a game domain or an entertainment domain, etc., which is not specifically limited herein. The first operating system domain may be integrated with a playback plug-in, which may be a video player, a picture player, etc. By triggering the playback plug-in, playing of the corresponding picture content may be achieved to meet the user's experience needs. The picture displaying operation is a play-triggering operation performed for the playback plug-in in the first operating system domain. Illustratively, assuming that the number of the first display devices is one and the number of the second display devices is two, when a user wants to play a video, the played video picture can be displayed on the display devices through a play-triggering operation performed on a playback plug-in for the video. In this embodiment, the desired effect is to play a complete video picture across three display devices, and the three display devices maintain synchronization during playing of a video picture.

In this embodiment, after the picture displaying operation is performed for the playback plug-in in the first operating system domain, the picture to be displayed by the playback plug-in may be considered as a to-be-displayed picture. In order to achieve complete playing of the to-be-displayed picture across the first display device and the second display device and maintain synchronization during the playing, the virtualization virtio technology is adopted in this embodiment. Virtio is a general virtualization framework through which hypervisor simulates a series of virtualized devices and enables these devices to be available within a virtual machine through application program interface invocations.

Following the above description, the first virtual front-end driver and the first virtual back-end driver are virtualized using the virtio technology. The first virtual front-end driver is integrated into the first operating system domain, and the first virtual back-end driver is integrated into the second operating system domain, which is equivalent to adding a virtual graphics card to the first operating system domain. Illustratively, virtio-gpu may be used, with its front end running on the first operating system domain and its back end running on the second operating system domain. In this way, a virtual display screen is added to the first operating system domain, and its picture is actually stretched away to the second operating system domain.

In addition, in order to avoid a more complicated situation of multi-video synchronization, in this embodiment, one playback plug-in instance is adopted and integrated into the first operating system domain. When the to-be-displayed picture is played, that is, the picture played by the playback plug-in is displayed, for example, the playback plug-in plays a complete video on the first operating system domain, directly covering the first display device and the second display device.

In this embodiment, when a user wants to perform picture playing for the playback plug-in on the first operating system domain, the picture displaying operation is performed for the playback plug-in. For example, the playback plug-in can be presented, in the form of a control, on the first display device, and the user can click a start-playing button of the control corresponding to the playback plug-in to play the corresponding picture. The execution subject SOC receives the picture displaying operation, and analyzes the picture displaying operation to analyze out that the user has performed the picture displaying operation. In response to the triggered picture displaying operation, the first display driver and the first virtual front-end driver in the first operating system domain respectively store the to-be-displayed picture in the buffer queues. In this embodiment, the buffer queue in which the to-be-displayed picture is stored by the first display driver is noted as the first buffer queue, and the buffer queue in which the to-be-displayed pictures is stored by the first virtual front-end driver is noted as the second buffer queue.

It should be clear that the purpose of storing the to-be-displayed picture in the second buffer queue by the first virtual front-end driver is to enable the second operating system domain to pull the to-be-displayed picture to be played by the playback plug-in in the first operating system domain.

It should be noted that the operating system domain may be a privileged domain and a non-privileged domain. The non-privileged domain can also be an instrument domain, a game domain, etc. The first operating system domain and the second operating system domain are different operating system domains, which is not specifically limited herein.

S 120, the first display driver pulls the to-be-displayed picture from the first buffer queue and drives the first display device to perform picture playing, concurrently, the first virtual back-end driver pulls the to-be-displayed picture from the second buffer queue and the second display driver drives the second display device to perform picture playing.

The first display driver is connected to a physical graphics card in the hardware, and the physical graphics card is noted as a first physical graphics card. Through driving the first physical graphics card by the first display driver, the to-be-displayed picture is played on the first display device. For example, the first display driver pulls the to-be-displayed picture from the first buffer queue, and drives the first display device to perform picture playing.

In this embodiment, the virtio technology is adopted to virtualize the first virtual front-end driver and the first virtual back-end driver. The first virtual front-end driver is integrated into the first operating system domain, and the first virtual back-end driver is integrated into the second operating system domain, which is equivalent to adding a virtual graphics card to the first operating system domain.

In order to ensure that the to-be-displayed picture can be performed across-screen playing in the first display device and the second display device, the first display driver pulls the to-be-displayed picture from the first buffer queue, concurrently, the first virtual back-end driver needs to pull the to-be-displayed picture from the second buffer queue.

It can be known that the second display driver is connected to a physical graphics card in the hardware, and the physical graphics card is noted as a second physical graphics card. Through driving the second physical graphics card by the second display driver, the to-be-displayed picture is played on the second display device. The first display device is driven to play the to-be-displayed picture, concurrently, the second display device is driven through driving the second display driver to play the to-be-displayed picture as well.

Considering that in the related art, a video or frames that is to be played is cut into several small pieces of video on a screen, which are subsequently played respectively on several display devices using playback plug-ins corresponding to operating system domains, and video synchronization is performed between the several display devices through some communication method. There will be a complex synchronization situation between the three pieces of video, including coarse-grained synchronization of starting, stopping, pausing, and resuming, and also involving fine-grained synchronization of video playback time. These synchronizations are very complex and difficult, and it is difficult to achieve a good synchronization effect. If it is not handled properly, it is prone to a situation of un-synchronization or unsatisfactory synchronization between the three pieces of video, which results in a poor visual effect.

In this embodiment, only one playback plug-in instance is used to play a complete video or frame, etc., directly covering the screens of several display devices. In order to directly cover the screens of several display devices, a driver is virtualized on the first operating system domain, while a display screen is virtualized, to use the display device connected to the second operating system domain, which is equivalent that in addition to the first operating system domain's own directly connected display device, the display device connected to the first operating system domain is connected to the display device connected to the second operating system domain. It can be considered that the to-be-displayed picture is stretched away onto the second operating system, so that the to-be-displayed picture can be displayed on the first display device while the to-be-displayed picture can also be displayed on the second display device.

Illustratively, FIG. 6 is an illustrative structural diagram of a SOC in a method for cross-domain display based on virtualization management provided by Embodiment 1 of the present application. As shown in FIG. 6, it is assumed that the first operating system domain is a game domain, and the second operating system domain is a privileged domain Dom0. The SOC includes the privileged domain Dom0 and the game domain. The game domain is integrated with a virtio-gpul front-end (i.e., the first virtual front-end driver), a dGPU driver (i.e., the first display driver) and a player plug-in, and is directly connected to a physical graphics card dGPU. The dGPU is mounted with two display devices, a CSD display device and a PSD display device (i.e., the first display device). The Dom0 domain integrates a virtio-gpu1 back-end (i.e., the first virtual back-end driver) and an iGPU driver (i.e., the second display driver), and is communicatively connected to a physical graphics card iGPU. The iGPU is mounted with an instrument display device (i.e., the second display device).

It can be understood that before playing the to-be-displayed picture of the playback plug-in, display information can be set in advance through a presented interface for man-machine interaction, for example, an arrangement order of the display device can be set, and a display mode of the display device can also be set. For example, the display mode of the display device may be an extended display mode, a copy display mode, a display mode displayed only on a display device 1, or a display mode displayed only on a display device 2, etc., which is not specifically limited herein.

In an embodiment, the first display device and the second display device are preset with an arrangement order, and display modes of the first display device and the second display device adopt an extended display mode.

For example, in order to achieve cross-domain and cross-screen displaying of a complete to-be-displayed picture, the arrangement order for the first display device and the second display can be preset so that they are arranged according to an actual arrangement order of the physical display devices, thereby ensuring that the order in which the to-be-displayed picture is displayed on the screens of the first display device and the second display device may not be wrong. Also, the display modes of the first display device and the second display device can be set to an extended display mode, thereby ensuring that the to-be-displayed picture completely covers the screens of the first display device and the second display device for a complete displaying.

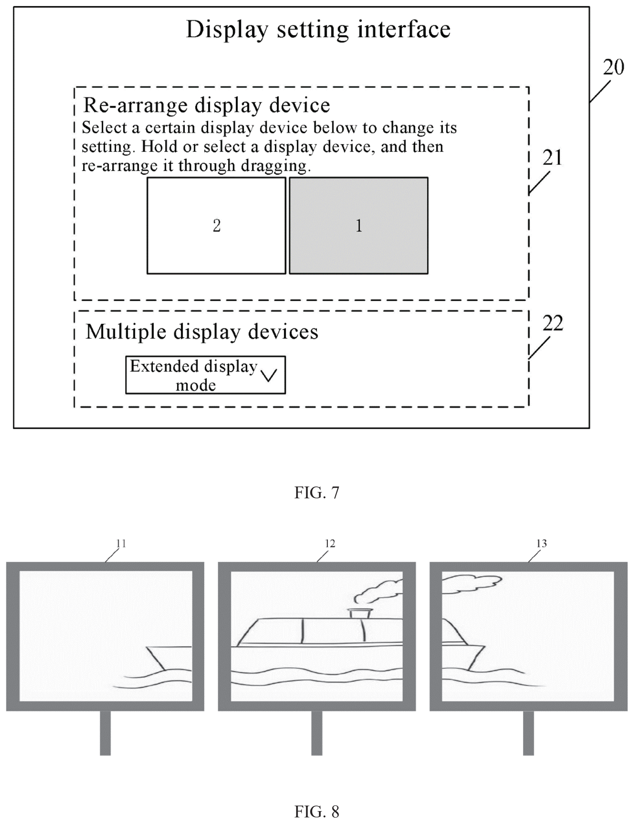

Illustratively, FIG. 7 is an illustrative diagram of a display setting interface in a method for cross-domain display based on virtualization management provided by Embodiment 1 of the present application. As shown in FIG. 7, the display setting interface 20 includes a functional module 21 for setting the arrangement order and a functional module 22 for setting the display mode. For example, an arrangement order of a display device can be set to 2 or 1, and a display mode thereof can be set to the extended display mode.

In the above-mentioned technical solution, through presetting the arrangement order and the display mode of the first display device and the second display device, the first display device and the second display device are arranged according to the order of the actual physical display devices, and also, the display mode adopts the extended display mode, which achieves that the to-be-displayed picture can be completely displayed across screens on each display device in a tiled manner, and also, can ensure that the display order can be correctly displayed on each display device, thereby improving the effect of the picture playing in a case of ensuring the synchronization of the playing of the to-be-displayed picture.

It should be noted that in actual applications, there is no specific restriction on the number of operating system domains and the number of display devices. In addition, other manners for stretching away image can be used to stretch away the image for displaying, such as virtio-fb, virtio-drm, and so on.

Illustratively, FIG. 8 is an illustrative diagram of an effect of cross-domain and cross-screen playing in an execution of a method for cross-domain display based on virtualization management provided by Embodiment 1 of the present application. The description is made continuing with the illustration of FIG. 4. Comparing with the display effect shown in FIG. 4, it can be seen from FIG. 8 that the picture with the ship is completely displayed on the display device 11, the display device 12, and the display device 13 respectively, and the displayed pictures of the three display devices remain synchronization so that the cross-domain display devices are synchronized when playing the to-be-displayed picture, which results in better playing effect during cross-domain and cross-multi-screen playing, and improving the user experience.

The embodiment of the present application provides a method for cross-domain display based on virtualization management, which is applied to the same chip-on-system (SOC). The SOC includes at least a first operating system domain and a second operating system domain. The first operating system domain integrates therein a first virtual front-end driver and a first display driver, and the first operating system domain is connected to a first display device; and the second operating system domain integrates therein a first virtual back-end driver and a second display driver, and the second operating system domain is connected to a second display device. The method includes: firstly, in response to a triggered picture displaying operation, storing, by the first display driver, a to-be-displayed picture in a first buffer queue, concurrently, storing, by the first virtual front-end driver, the to-be-displayed picture in a second buffer queue, where the picture displaying operation is a play-triggering operation performed for a playback plug-in in the first operating system domain; then pulling, by the first display driver, the to-be-displayed picture from the first buffer queue and driving the first display device to perform picture playing, concurrently, pulling, by the first virtual back-end driver, the to-be-displayed picture from the second buffer queue and driving, by the second display driver, the second display device to perform picture playing. In the above-mentioned technical solution, by deploying a virtual front-end driver in the first operating system domain and a virtual back-end driver in the second operating system domain, which is equivalent to adding a virtual display screen in the first operating system domain, and stretching away the to-be-displayed picture to the second operating system domain, so that the to-be-displayed picture is directly covered on a plurality of cross-domain display devices, and the to-be-displayed picture is simultaneously displayed in an extended manner on the first display device connected to the first operating system domain and the second display device connected to the second operating system domain, avoiding the situation where the picture is not played synchronously across domains and across multi-screen, and achieving synchronization of the cross-domain display devices when playing the to-be-displayed picture, thereby improving the playing effect and improving the user experience in a case of cross-domain and cross-multi-screen playing.

In an embodiment, the second operating system domain is a privileged domain, and the first operating system domain is a non-privileged domain.

Since the second operating system domain is a privileged domain, it has the privilege of accessing hardware devices and can manage and control other domains. The first operating system domain may be a game domain. In order to better support large-scale games, a GPU (generally called a dGPU) may be generally added, and the game domain can be directly connected to the dGPU.

In an embodiment, based on the above-mentioned embodiment, the method further includes: in response to a triggered picture stopping operation, switching the to-be-displayed picture displayed on the first display device to an original display picture.

The picture stopping operation is a play-stopping triggering operation performed for the playback plug-in in the first operating system domain. Illustratively, assuming that the number of the first display devices is one and the number of the second display devices is two, during playing a video on the first display device and the second display device in a tiled manner, when a user wants to stop playing the video, the playing video picture can be closed and no longer displayed on the display devices through performing the play-stopping triggering operation for the playback plug-in for the video.

In this embodiment, when a user wants to stop picture playing for the playback plug-in on the first operating system domain, the picture stopping operation can be performed for the playback plug-in. For example, the playback plug-in can be presented, in the form of a control, on the first display device, and the user can click a playing-stop button of the control corresponding to the playback plug-in to stop playing the corresponding picture. The execution subject SOC receives the picture stopping operation, and analyzes the picture stopping operation to analyze out that the user has performed the picture stopping operation. In response to the triggered picture stopping operation, the to-be-displayed picture displayed on the first display device is switched to the original display picture. The original display picture can be understood as a picture originally corresponding to the second operating system domain. Illustratively, it is assumed that the second display device connected to the second operating system domain generally displays thereon instrument information. When the playing button of the playback plug-in on the first operating system domain is clicked, a playing picture of the playback plug-in is displayed on the first display device and the second display device; and when the playing-stop button of the playback plug-in on the first operating system domain is clicked, the playing picture of the playback plug-in displayed on the second display device is switched to display of the instrument information.

The above-mentioned embodiment further adds a function of switching the picture of the second display device when the picture stopping operation is received. The to-be-displayed picture displayed on the second display device, in response to the triggered picture stopping operation, is switched to the original display picture, which achieves that when there is no need to perform cross-domain and cross-screen displaying of the playing content of the playback plug-in on the first operating system domain, the content displayed on the second display device connected to the second operating system domain can be switched to the original display picture, thereby realizing automatic switching of the picture of the second display device.

In an embodiment, the SOC further includes a third operating system domain. The third operating system domain is integrated with a second virtual front-end driver, and the second operating system domain is integrated with a second virtual back-end driver.

The SOC also includes a third operating system domain, which is another operating system domain different from the first operating system domain and the second operating system domain. The second operating system domain is a privileged domain, and the third operating system domain is a non-privileged domain. The second operating system domain is integrated with a second display driver. In this embodiment, there is no display driver in the third operating system domain. In order to display the corresponding picture in the third operating system domain on the second display device, the virtualization technology virtio is used to virtualize a virtual front-end driver and a virtual back-end driver, which are respectively noted as the second virtual front-end driver and the second virtual back-end driver. The second virtual front-end driver is integrated into the third operating system domain, and the second virtual back-end driver is integrated into the second operating system domain.

In an embodiment, the in response to the triggered picture stopping operation, switching the to-be-displayed picture displayed on the first display device to the original display picture can include the steps as follows.

a1) In response to the triggered picture stopping operation, the second virtual front-end driver stores the original display picture in a third buffer queue.

In this embodiment, in response to the triggered picture stopping operation, the second virtual front-end driver in the third operating system domain stores the original display picture corresponding to the third operating system domain into the buffer queue. In this embodiment, the buffer queue in which the original display picture is stored through the second virtual front-end driver is noted as the third buffer queue. It should be clear that the purpose of storing the to-be-displayed picture in the third buffer queue through the second virtual front-end driver is to enable the second operating system domain to pull the original display picture corresponding to the third operating system domain.

b1) The second virtual back-end driver pulls the original display picture from the third buffer queue, and the second display driver drives the second display device to switch the to-be-displayed picture to the original display picture for picture playing.

The to-be-displayed picture is desktop image data corresponding to the first operating system domain after the play-triggering operation is performed for the playback plug-in, and the original display picture is desktop image data corresponding to the third operating system domain.

For example, the second virtual back-end driver pulls the original display picture from the third buffer queue, and the second display driver drives the second display device to switch the to-be-displayed picture to the original display picture for playing.

The above-mentioned technical solution describes the steps of how to switch the to-be-displayed picture displayed on the first display device to the original display picture in response to the triggered picture stopping operation. The second virtual front-end driver and the second virtual back-end driver are virtualized through the virtualization technology virtio. The original display picture corresponding to the third operating system domain is obtained by the second virtual front-end driver, the original display picture is pulled to the second operating system domain by the second virtual back-end driver, and picture switching is performed through driving the second display device by driving the second original driver, which achieves that when there is no need to perform cross-domain and cross-screen displaying of the playing content of the playback plug-in on the first operating system domain, the content displayed on the second display device connected to the second operating system domain can be switched to the original display picture, thereby realizing automatic switching of the picture of the second display device.

In an embodiment, the pulling, by the second virtual back-end driver, the original display picture from the third buffer queue, and driving, by the second display driver, the second display device to perform picture playing includes the steps as follows.

b11) The second virtual back-end driver pulls from the third buffer queue and sends the original display picture to a display-switching module in the second operating system domain.

In this embodiment, there is a display-switching module in the second operating system domain, which is responsible for controlling the switching of content displayed on the second display device. When the playback plug-in is playing, the to-be-displayed picture corresponding to the first operating system domain is displayed on the second display device; after the playback plug-in stops playing, the image in the third operating system domain is displayed on the second display device.

For example, when the picture stopping operation is triggered, the display-switching module is controlled to be connected to the second virtual back-end driver, which is equivalent to pulling the original display picture in the third operating system domain to the second operating system domain, where the original display picture is pulled from the third buffer queue by the second virtual back-end driver, and is sent to the display-switching module in the second operating system domain.

b12) The display-switching module sends the original display picture to the second display driver.

For example, the original display picture is sent to the second display driver by the display-switching module to be further displayed on the second display device.

b13) The second display driver drives the second display device to switch the to-be-displayed picture to the original display picture for picture playing.

For example, the second display driver drives the second display device to switch the to-be-displayed picture to the original display picture for playing.

In the above-mentioned technical solution, the second operating system domain further includes a display-switching module, which refines the steps of pulling, by the second virtual back-end driver, the original display picture from the third buffer queue and driving, by the second display driver, the second display device to perform picture playing. The original display picture is displayed on the second display device through switching by the display-switching module, which achieves that when a picture stopping operation is received, the to-be-displayed picture is switched, through controlling the display-switching module, to the original display picture.

### Embodiment 2

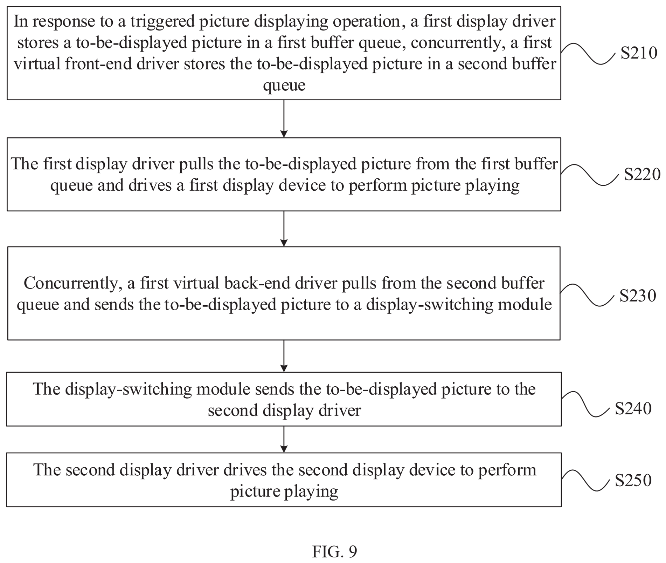

FIG. 9 is a schematic flowchart of a method for cross-domain display based on virtualization management provided by Embodiment 2 of the present application. This embodiment is an adjustment to the above-mentioned embodiment. In this embodiment, a further definition is made for "pulling, by the first virtual back-end driver, the to-be-displayed picture from the second buffer queue and driving, by the second display driver, the second display device to perform picture playing".

As shown in FIG. 9, this Embodiment 2 provides a method for cross-domain display based on virtualization management, including the steps as follows.

S210, in response to a triggered picture displaying operation, a first display driver stores a to-be-displayed picture in a first buffer queue, concurrently, a first virtual front-end driver stores the to-be-displayed picture in a second buffer queue.

S220, the first display driver pulls the to-be-displayed picture from the first buffer queue and drives a first display device to perform picture playing.

S230, concurrently, a first virtual back-end driver pulls from the second buffer queue and sends the to-be-displayed picture to a display-switching module.

In this embodiment, there is a display-switching module in a second operating system domain, which is responsible for controlling the switching of content displayed on the second display device. When a playback plug-in is playing, the to-be-displayed picture corresponding to a first operating system domain is displayed on the second display device; after the playback plug-in stops playing, an image of a third operating system domain is displayed on the second display device.

For example, when a picture-playing operation is triggered, the display-switching module is controlled to be connected to the first virtual back-end driver, which is equivalent to pulling the to-be-display picture in the first operating system domain to the second operating system domain, where the to-be-display picture is pulled from the second buffer queue by the first virtual back-end driver, and is sent to the display-switching module in the second operating system domain.

It should be noted that the method includes an inter-domain communication mechanism, which notifies the display-switching module on the second operating system domain to perform picture-switching when the playback plug-in performs picture-playing or picture-stopping. For example, a socket mechanism can be used, which is a communication mechanism between a client party and a service party, and the inter-domain communication mechanism provided by hypervisor can also be used, which is not specifically limited herein.

S240, the display-switching module sends the to-be-displayed picture to the second display driver.

For example, the to-be-displayed picture is sent to the second display driver by the display-switching module to be further displayed on the second display device.

S250, the second display driver drives the second display device to perform picture playing.

For example, the to-be-displayed picture is played through driving the second display device by the second display driver.

This embodiment adds the second operating system domain further including a display-switching module, which refines the steps of pulling, by the first virtual back-end driver, the to-be-displayed picture from the second buffer queue and driving, by the second display driver, the second display device to perform picture playing. The to-be-display picture is displayed on the second display device through switching by the display-switching module, which achieves that when a picture playing operation is received, the original display picture is switched, through controlling the display-switching module, to the to-be-display picture for playing.

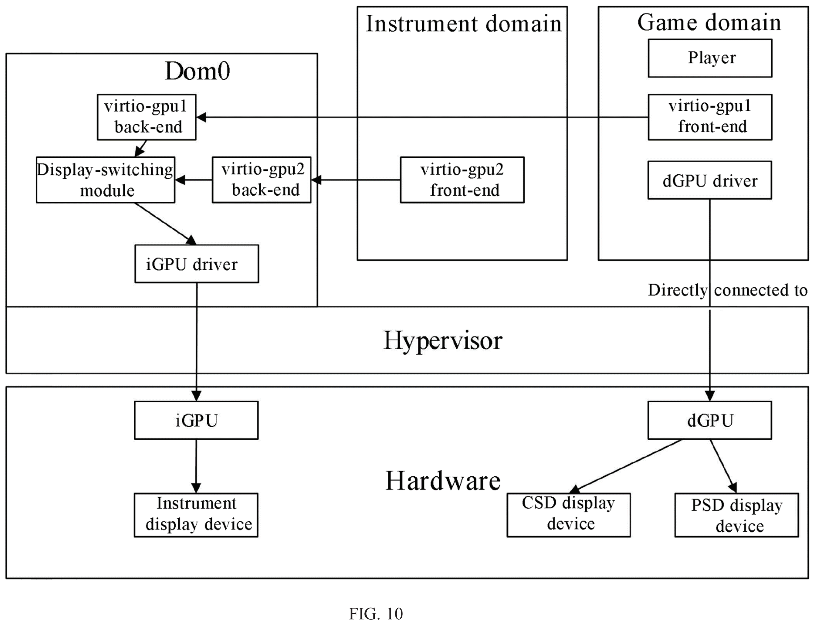

Illustratively, FIG. 10 is another illustrative structural diagram of a SOC in an execution of a method for cross-domain display based on virtualization management provided by Embodiment 2 of the present application. As shown in FIG. 10, it is assumed that the first operating system domain is a game domain, the second operating system domain is a privileged domain Dom0, and the third operating system domain is an instrument domain. The SOC includes the privileged domain Dom0, the game domain and the instrument domain. The game domain integrates a virtio-gpul front-end (i.e., the first virtual front-end driver), a dGPU driver (i.e., the first display driver) and a player plug-in, and is directly connected to a physical graphics card dGPU. The dGPU is mounted with two display devices, the CSD display device and the PSD display device (i.e., the first display device). The Dom0 domain integrates a virtio-gpu1 back-end (i.e., the first virtual back-end driver), a virtio-gpu2 back-end (i.e., the second virtual back-end driver), the display-switching module and the iGPU driver (i.e., the second display driver), and is communicatively connected to the physical graphics card iGPU. The iGPU is mounted with an instrument display device (i.e., the second display device). The display-switching module can receive information sent by the virtio-gpul back-end and the virtio-gpu2 back-end respectively, and send the information to the iGPU driver. The instrument domain integrates the virtio-gpu2 front-end (i.e., the second virtual front-end driver).

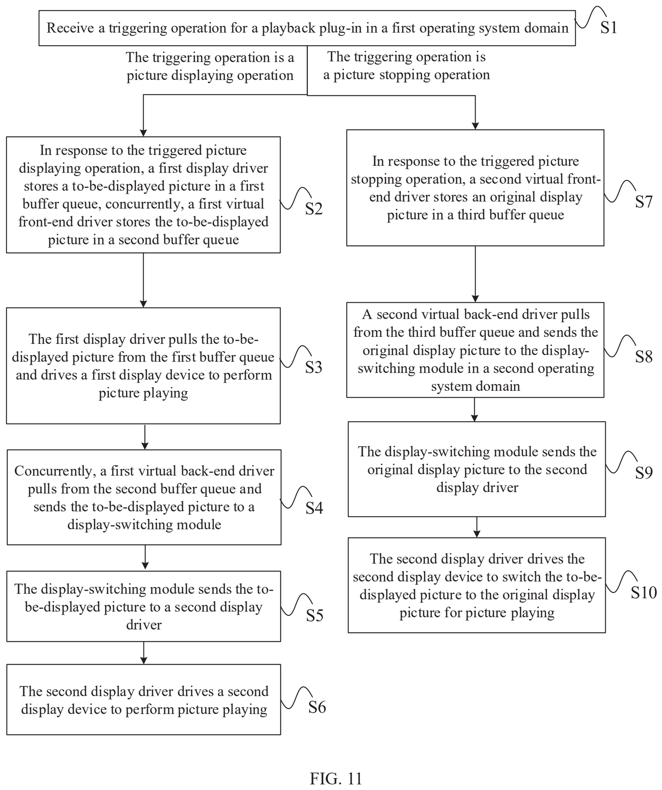

In order to more clearly describe the embodiments of the present application, a scenario is described as an example in which multiple system operating domains and multiple display devices perform picture displaying. FIG. 11 is an illustrative flowchart of a method for cross-domain display based on virtualization management in a certain application scenario provided by Embodiment 2 of the present application. As shown in FIG. 11, the steps of the cross-domain display based on virtualization management can be described as follows.

S1, receive a triggering operation for a playback plug-in in a first operating system domain. If the triggering operation is a picture displaying operation, execute steps S2-S6; and if the triggering operation is a picture stopping operation, execute steps S7-S10.

S2, in response to a triggered picture displaying operation, a first display driver stores a to-be-displayed picture in a first buffer queue, concurrently, a first virtual front-end driver stores the to-be-displayed picture in a second buffer queue.

S3, the first display driver pulls the to-be-displayed picture from the first buffer queue and drives a first display device to perform picture playing.

S4, concurrently, a first virtual back-end driver pulls the to-be-displayed picture from the second buffer queue and sends the to-be-displayed picture to a display-switching module.

S5, the display-switching module sends the to-be-displayed picture to a second display driver.

S6, the second display driver drives a second display device to perform picture playing.

S7, in response to a triggered picture stopping operation, a second virtual front-end driver stores an original display picture in a third buffer queue.

S8, a second virtual back-end driver pulls from the third buffer queue and sends the original display picture to the display-switching module in a second operating system domain.

S9, the display-switching module sends the original display picture to the second display driver.

S10, the second display driver drives the second display device to switch the to-be-displayed picture to the original display picture for picture playing.

### Embodiment 3

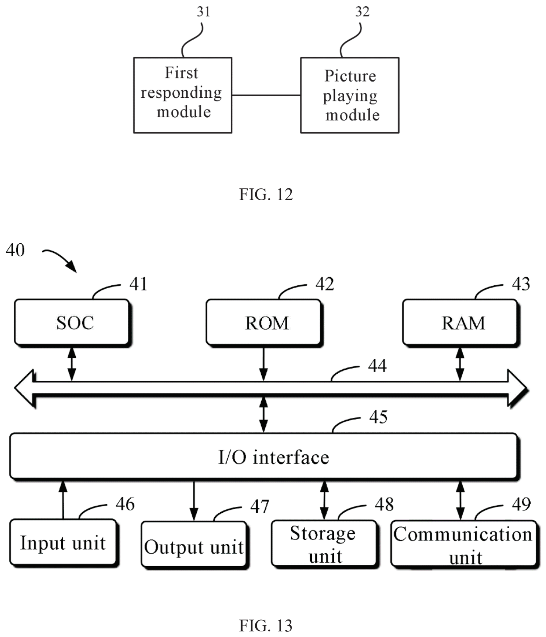

FIG. 12 is a schematic structural diagram of an apparatus for cross-domain display based on virtualization management provided by Embodiment 3 of the present application. The apparatus can perform cross-domain and cross-multi-screen displaying of a picture and can be embodied in the form of hardware and/or software. The apparatus is integrated to one system-on-chip (SOC), which includes at least a first operating system domain and a second operating system domain, where the first operating system domain integrates therein a first virtual front-end driver and a first display driver, and the first operating system domain is connected to a first display device; the second operating system domain integrates therein a first virtual back-end driver and a second display driver, and the second operating system domain is connected to a second display device. As shown in FIG. 12, the apparatus includes a first responding module 31 and a picture playing module 32, where
the first responding module 31 is configured to: in response to a triggered picture displaying operation, store, by the first display driver, a to-be-displayed picture in a first buffer queue, concurrently, store, by the first virtual front-end driver, the to-be-displayed picture in a second buffer queue, where the picture displaying operation is a play-triggering operation performed for a playback plug-in in the first operating system domain; and
the picture playing module 32 is configured to: pull, by the first display driver, the to-be-displayed picture from the first buffer queue and drive the first display device to perform picture playing, concurrently, pull, by the first virtual back-end driver, the to-be-displayed picture from the second buffer queue and drive, by the second display driver, the second display device to perform picture playing.

The embodiment of the present application provides an apparatus for cross-domain display based on virtualization management, which is integrated in the same system-on-chip (SOC). The SOC includes at least a first operating system domain and a second operating system domain. The first operating system domain integrates therein a first virtual front-end driver and a first display driver, and the first operating system domain is connected to a first display device; and the second operating system domain integrates therein a first virtual back-end driver and a second display driver, and the second operating system domain is connected to a second display device, including: firstly, in response to a triggered picture displaying operation, storing, by the first display driver, a to-be-displayed picture in a first buffer queue, concurrently, storing, by the first virtual front-end driver, the to-be-displayed picture in a second buffer queue, where the picture displaying operation is a play-triggering operation performed for a playback plug-in in the first operating system domain; then pulling, by the first display driver, the to-be-displayed picture from the first buffer queue and driving the first display device to perform picture playing, concurrently, pulling, by the first virtual back-end driver, the to-be-displayed picture from the second buffer queue and driving, by the second display driver, the second display device to perform picture playing. In the above-mentioned technical solution, by deploying a virtual front-end driver in the first operating system domain and a virtual back-end driver in the second operating system domain, which is equivalent to adding a virtual display screen in the first operating system domain, and stretching away the to-be-displayed picture to the second operating system domain, so that the to-be-displayed picture is directly covered on a plurality of cross-domain display devices, and the to-be-displayed picture is simultaneously displayed in an extended manner on the first display device connected to the first operating system domain and the second display device connected to the second operating system domain, avoiding the situation where the picture is not played synchronously across domains and across multi-screen, and achieving synchronization of the cross-domain display devices when playing the to-be-displayed picture, thereby improving the playing effect and improving the user experience in a case of cross-domain and cross-multi-screen playing.

In an embodiment, the second operating system domain further includes a display-switching module.

Correspondingly, the picture playing module 32 is configured to: pull the to-be-displayed picture, by the first virtual back-end driver, from the second buffer queue and send the to-be-displayed picture to the display-switching module,;
send, by the display-switching module, the to-be-displayed picture to the second display driver; and
drive, by the second display driver, the second display device to perform picture playing.

In an embodiment, the first display device and the second display device are preset with an arrangement order, and display modes of the first display device and the second display device adopt an extended display mode.

In an embodiment, the apparatus further includes a second responding module, configured to:
in response to a triggered picture stopping operation, switch the to-be-displayed picture displayed on the first display device to an original display picture, where the picture stopping operation is a play-stopping triggering operation performed for the playback plug-in in the first operating system domain.

In an embodiment, the SOC further includes a third operating system domain, the third operating system domain is integrated with a second virtual front-end driver, and the second operating system domain is integrated with a second virtual back-end driver;
accordingly, the second responding module may include:
a response unit, configured to: in response to the triggered picture stopping operation, store, by the second virtual front-end driver, the original display picture in a third buffer queue; and
a playback unit, configured to: pull, by the second virtual back-end driver, the original display picture from the third buffer queue, and drive, by the second display driver, the second display device to switch the to-be-displayed picture to the original display picture for picture playing.

In an embodiment, the playback unit is configured to:
pull, by the second virtual back-end driver, the original display picture from the third buffer queue and send the original display picture to a display-switching module in the second operating system domain;
send, by the display-switching module, the original display picture to the second display driver; and
drive, by the second display driver, the second display device to switch the to-be-displayed picture to the original display picture for picture playing.

In an embodiment, the second operating system domain is a privileged domain, and the first operating system domain and a third operating system domain are non-privileged domains.

In an embodiment, the to-be-displayed picture is desktop image data corresponding to the first operating system domain after the play-triggering operation is performed for the playback plug-in, and the original display picture is desktop image data corresponding to a third operating system domain.

The apparatus for cross-domain display based on virtualization management provided by the embodiment of the present application can execute the method for cross-domain display method based on virtualization management provided in any embodiment of the present application and has the corresponding functional modules and beneficial effects for the execution method.

### Embodiment 4

FIG. 13 is a schematic structural diagram of an electronic device provided in Embodiment 4 of the present application. The electronic device is intended to refer to various forms of digital computers, such as laptops, desktops, workstations, personal digital assistants, servers, blade servers, mainframes, and other appropriate computers. The electronic device may also refer to various forms of mobile devices, such as personal digital processing, cellular phones, smartphones, wearable devices (e.g., helmets, glasses, watches, etc.), and other similar computing devices. The components shown herein, their connections and relationships, and their functions, are intended merely as examples, and are not intended to limit implementations of the present application described and/or claimed herein.

As shown in FIG. 13, the electronic device 40 includes at least one system-on-chip SOC including thereon at least one operating system domain, where each of the operating system domains is respectively connected to at least one execution device and a memory that is communicatively connected to at least one SOC 41, such as a read-only memory (Read-Only Memory, ROM) 42, a random access memory (Random Access Memory, RAM) 43 and so on. The memory stores a computer program that is executable by the at least one SOC, and the SOC 41 can perform various appropriate actions and processes according to the computer program stored in the ROM 42 or the computer program loaded from the storage unit 48 to the RAM 43. Various programs and data required for the operation of the electronic device 40 may also be stored in the RAM 43. The SOC 41, the ROM 42, and the RAM 43 are connected to one another via a bus 44. An input/output (Input/Output, I/O) interface 45 is also connected to the bus 44.

Multiple components in the electronic device 40 are connected to the I/O interface 45 including: an input unit 46, such as a keyboard, a mouse, etc.; an output unit 47, such as various types of displays, speakers, etc.; a storage unit 48, such as a disk, an optical disk, etc.; and a communication unit 49, such as a network card, a modem, a wireless communication transceiver, etc. The communication unit 49 allows the electronic device 40 to exchange information/data with other devices through a computer network such as the Internet and/or various telecommunication networks.

The SOC 41 executes the various methods and processes described above, such as the method for cross-domain display based on virtualization management.

In some embodiments, the method for cross-domain display based on virtualization management may be implemented as a computer program, which is tangibly contained in a computer-readable storage medium, such as the storage unit 48. In some embodiments, part or all of the computer program may be loaded into and/or installed onto the electronic device 40 via the ROM 42 and/or the communication unit 49. When the computer program is loaded into the RAM 43 and executed by the SOC 41, one or more steps of the method for cross-domain display based on virtualization management described above may be performed. Alternatively, in other embodiments, the SOC 41 may be configured to execute the method for cross-domain display based on virtualization management in any other appropriate manner (for example, by means of firmware).

Various implementations of the systems and techniques described above in this document can be implemented in a digital electronic circuit system, an integrated circuit system, a field programmable gate array (Field Programmable Gate Array, FPGA), an application specific integrated circuit (Application Specific Integrated Circuit, ASIC), an application specific standard product (Application Specific Standard Product, ASSP), a system on chip (System on Chip, SOC), a load programmable logic device (Complex Programmable Logic Device, CPLD), computer hardware, firmware, software, and/or combinations thereof. These various implementations may include being implemented in one or more computer programs that can be executed and/or interpreted on a programmable system including at least one programmable SOC, which can be a special-purpose or general-purpose programmable SOC that can receive data and instructions from a storage system, at least one input apparatus, and at least one output apparatus, and transmit data and instructions to the storage system, the at least one input apparatus, and the at least one output apparatus.

The computer programs for implementing the methods of the present application may be written in any combination of one or more programming languages. These computer programs may be provided to a SOC of a general-purpose computer, a special-purpose computer or other programmable data processing apparatus, so that when the computer program is executed by the SOC, the functions/operations specified in the flowcharts and/or block diagrams are implemented. The computer program may execute entirely or partly on a machine, execute partly on a machine as a stand-alone software package and partly on a remote machine, or execute entirely on a remote machine or a server.

In the context of the present application, a computer-readable storage medium may be a tangible medium that can contain or store a computer program for use by or in connection with an instruction execution system, apparatus, or device. The computer-readable storage medium may include but is not limited to an electronic, magnetic, optical, electromagnetic, infrared, or semiconductor system, apparatus, or device, or any suitable combination thereof. Alternatively, the computer-readable storage medium may be a machine-readable signal medium. The example of the machine-readable storage medium may include an electrical connection based on one or more wires, a portable computer disk, a hard disk, a random access memory (RAM), a read-only memory (ROM), an erasable programmable read-only memory (Erasable Programmable Read-Only Memory, EPROM) or a flash memory, an optical fiber, a compact disc read-only memory (Compact Disc Read-Only Memory, CD-ROM), an optical storage device, a magnetic storage device, or any suitable combination of thereof.

To provide interaction with a user, the systems and techniques described herein can be implemented on the electronic device. The electronic device has: a display apparatus (e.g., a cathode ray tube (Cathode Ray Tube, CRT) or a liquid crystal display (Liquid Crystal Display, LCD) monitor) monitor) for displaying information to the user; and a keyboard and pointing apparatus (e.g., a mouse or a trackball) through which the user can provide input to the electronic device. Other types of apparatuses may also be used to provide interaction with a user, for example, the feedback provided to the user may be any form of sensory feedback (e.g., visual feedback, auditory feedback, or tactile feedback), and they can receive input from the user in any form (including acoustic input, voice input, or tactile input).

The systems and techniques described herein can be implemented in a computing system (e.g., as a data server) that includes a back-end component or a computing system (e.g., an application server) that includes a first-piece component, or a computing system (e.g., a user computer with a graphical user interface or a web browser through which a user can interact with implementations of the systems and techniques described herein) that includes a front-end component, or a computing system that includes any combination of such back-end component, first-piece component, or front-end component. The components of the system can be interconnected by any form or medium of digital data communication (e.g., a communication network). The example of the communication network includes: a local area network (Local Area Network, LAN), a wide area network (Wide Area Network, WAN), a blockchain network, and the Internet.

The computing system may include a client and a server. The client and the server are generally remote from each other and typically interact through the communication network. The relationship between client and server is generated by virtue of computer programs running on a respective computer and having a client-server relationship with each other. The server can be a cloud server, also called a cloud computing server or cloud host, which is a host product in the cloud computing service system. It solves the defects of difficult management and weak business scalability in services with traditional physical hosts and virtual private servers (Virtual Private Servers, VPSs).

It should be understood that various forms of the procedures shown above may be used to reorder, add, or delete steps. For example, the steps described in the present application may be executed in parallel, sequentially, or in a different order, as long as the expected results of the technical solution of the present application can be achieved, and this document does not impose any restrictions thereon.

The specific implementations mentioned above do not constitute limitations on the protection scope of the present application. Those skilled in the art should understand that various modifications, combinations, sub-combinations and substitutions may be made according to design requirements and other factors.

## Claims

1. A method for cross-domain display based on virtualization management, applied to one system-on-chip SOC comprising thereon at least a first operating system domain and a second operating system domain, wherein the first operating system domain integrates therein a first virtual front-end driver and a first display driver, and the first operating system domain is connected to a first display device; the second operating system domain integrates therein a first virtual back-end driver and a second display driver, and the second operating system domain is connected to a second display device; and the method comprises:
in response to a triggered picture displaying operation, storing, by the first display driver, a to-be-displayed picture in a first buffer queue, concurrently, storing, by the first virtual front-end driver, the to-be-displayed picture in a second buffer queue, wherein the picture displaying operation is a play-triggering operation performed for a playback plug-in in the first operating system domain; and
pulling, by the first display driver, the to-be-displayed picture from the first buffer queue and driving the first display device to perform picture playing, concurrently, pulling, by the first virtual back-end driver, the to-be-displayed picture from the second buffer queue and driving, by the second display driver, the second display device to perform picture playing.

2. The method according to claim 1, wherein the second operating system domain further comprises a display-switching module;
wherein the pulling, by the first virtual back-end driver, the to-be-displayed picture from the second buffer queue and driving, by the second display driver, the second display device to perform picture playing comprises:
pulling, by the first virtual back-end driver, the to-be-displayed picture from the second buffer queue and sending the to-be-displayed picture to the display-switching module;
sending, by the display-switching module, the to-be-displayed picture to the second display driver; and
driving, by the second display driver, the second display device to perform picture playing.

3. The method according to claim 1, wherein the first display device and the second display device are preset with an arrangement order, and display modes of the first display device and the second display device adopt an extended display mode.

4. The method according to claim 1, further comprising:
in response to a triggered picture stopping operation, switching the to-be-displayed picture displayed on the first display device to an original display picture, wherein the picture stopping operation is a play-stopping triggering operation performed for the playback plug-in in the first operating system domain.

5. The method according to claim 4, wherein the SOC further comprises a third operating system domain, the third operating system domain is integrated with a second virtual front-end driver, and the second operating system domain is integrated with a second virtual back-end driver; and
wherein in response to the triggered picture stopping operation, switching the to-be-displayed picture displayed on the first display device to the original display picture comprises:
in response to the triggered picture stopping operation, storing, by the second virtual front-end driver, the original display picture in a third buffer queue;
pulling, by the second virtual back-end driver, the original display picture from the third buffer queue, and driving, by the second display driver, the second display device to switch the to-be-displayed picture to the original display picture for picture playing.

6. The method according to claim 5, wherein the pulling, by the second virtual back-end driver, the original display picture from the third buffer queue, and driving, by the second display driver, the second display device to switch the to-be-displayed picture to the original display picture for picture playing comprises:
pulling, by the second virtual back-end driver, the original display picture from the third buffer queue and sending the original display picture to a display-switching module in the second operating system domain;
sending, by the display-switching module, the original display picture to the second display driver; and
driving, by the second display driver, the second display device to switch the to-be-displayed picture to the original display picture for picture playing.

7. The method according to claim 1, wherein the second operating system domain is a privileged domain, and the first operating system domain and a third operating system domain are non-privileged domains.

8. The method according to any one of claims 4 to 6, wherein the to-be-displayed picture is desktop image data corresponding to the first operating system domain after the play-triggering operation is performed for the playback plug-in, and the original display picture is desktop image data corresponding to a third operating system domain.

9. An apparatus for cross-domain display based on virtualization management, integrated in one system-on-chip SOC comprising thereon at least a first operating system domain and a second operating system domain, wherein the first operating system domain integrates therein a first virtual front-end driver and a first display driver, and the first operating system domain is connected to a first display device; the second operating system domain integrates therein a first virtual back-end driver and a second display driver, and the second operating system domain is connected to a second display device; and the apparatus comprises:
a first responding module, configured to: in response to a triggered picture displaying operation, store, by the first display driver, a to-be-displayed picture in a first buffer queue, concurrently, store, by the first virtual front-end driver, the to-be-displayed picture in a second buffer queue, wherein the picture displaying operation is a play-triggering operation performed for a playback plug-in in the first operating system domain; and
a picture playing module, configured to: pull, by the first display driver, the to-be-displayed picture from the first buffer queue and drive the first display device to perform picture playing, concurrently, pull, by the first virtual back-end driver, the to-be-displayed picture from the second buffer queue and drive, by the second display driver, the second display device to perform picture playing.

10. An electronic device, comprising:
at least one system-on-chip SOC, wherein an SOC of the at least one SOC comprises a first operating system domain and a second operating system domain; the first operating system domain integrates therein a first virtual front-end driver and a first display driver, and the first operating system domain is connected to a first display device; the second operating system domain integrates therein a first virtual back-end driver and a second display driver, and the second operating system domain is connected to a second display device; and
a memory in communication with the at least one SOC;
wherein the memory stores a computer program executable by the at least one SOC, and the computer program is executed by the at least one SOC to enable the at least one SOC to execute the method for cross-domain display based on virtualization management according to any one of claims 1 to 8.

11. A computer-readable storage medium storing computer instructions, wherein the computer instructions are used to enable an SOC to implement the method for cross-domain display based on virtualization management according to any one of claims 1 to 8 when executed.
